# EUROPEAN PATENT APPLICATION

(11) **EP 1 661 963 A1**
(43) Date of publication of application: **31.05.2006**
(21) Application number: 04460051.8
(22) Date of filing: 24.11.2004
(51) Int. Cl.: C09J 103/00, C09J 131/00, C09J 131/04

(54) **Adhesive to glue posters to advertising boards and method of its production**

(71) Applicant: Kulicki, Andrzej, Dariusz, 04-360 Warszawa (PL); Kulika, Wieslawa, 04-360 Warszawa (PL)
(72) Inventor: Kulicki, Andrzej, Dariusz, 04-360 Warszawa (PL); Kulika, Wieslawa, 04-360 Warszawa (PL)
(74) Representative: Przybysiak, Halina

(57) **Abstract**

An adhesive containing 40 to 50 parts by weight of water, from 30 to 40 parts by eight of poly(vinyl acetate) with plasticizer added, from 5 to 30 parts by weight of diene polymer, from 1 to 10 parts by weight of acrylic polymer, form 0 to 8 parts of polysaccharide, from 2 to 15 parts of diethylene glycol and propylene glycol.

Adhesive is obtained using method based on mixing components introduced to water in defined sequence: (component (b) at the temperature of 25°C followed by mixing for 30 minutes at 100 rpm, next component (c) at the temperature of 25°C followed by mixing for 30 minutes, next component (d) at the temperature of 25°C followed by mixing for 60 minutes and component (f) at the same temperature followed by mixing for 120 minutes.

## Description

The invention presents an adhesive for gluing paper posters to metal outdoor posting boards (billboards) and the process of production of this adhesive.

The known adhesives, widely used for gluing paper posters to outdoor wooden boards, based on polysaccharides utilize mechanical adhesion, i.e. glue penetrates pores in the glued materials: paper poster and surface of wooden posting board.

As polysaccharide alginate dissolved in water (sodium or potassium salt of thereof) can be used, alternatively cellulose or starch can be used.

Many types of cellulose or starch-based adhesives used to glue paper posters to outdoor wooden boards are affected by changing atmospheric conditions, e.g.: from summer heat to winter freezing temperatures, dry air or rain, fog or snow. The adhesive layers joining posters surface with the surface of wooden board are inflexible, brittle, and characterized with low mechanical strength. These layers tend to crack due to the effect of vibrations and shakes caused by heavy traffic, which effects in premature defects and damages in posters.

The attempts aiming to eliminate the above described disadvantages of currently available glues (adhesives) were mainly based on adding to the ready-to-use watery solution of polysaccharide adhesive up to 15 parts by weight of dispersion of acrylic polymer to improve the resistance to large changes of atmospheric conditions or up to 15 parts by weight of additives preventing freezing of mixture such as calcium chloride or ethylene glycol. Nevertheless, thus obtained adhesives were still inflexible, brittle and non-resistive to the effect of high temperatures. They are also loosing their gluing properties when exposed to water.

The development of advertising techniques has introduced changes leading to the increased durability of used materials. Metal boards are often used nowadays, the adhesives used on such boards must be elastic in order to compensate for the expansion and shrinking of metal surfaces under the influence of changing temperature. Moreover, the adhesive applied must be characterized by high degree of cohesion, i.e. result in a joint which offers a high mechanical strength after hardening.

In course of the research it was found that adhesive suitable to glue posters to metal boards can be obtained by mixing components containing appropriate amounts of poly(vinyl acetate) and / or diene polymer and/or arylic polymer and/or polysaccharide.

Herein presented invention relates to the method of production of adhesive designed for gluing paper posters to the metal outdoor posting boards (billboards) where said method is based on a preparation of a mixture comprising of:
a) from 10 to 80 parts by weight, preferably from 30 to 60 parts by weight, more preferably from 40 to 50 parts by weight of water;
b) from 5 to 60 parts by weight of polymer poly(vinyl acetate), preferably from 15 to 45 parts by weight, more preferably from 30 to 40 parts by weight of polymer obtained in course of emulsion polymerization of vinyl acetate employing poly(vinyl alcohol) as protective colloid and containing from 0 to 30% with respect to the total polymer mass, preferably from 2 to 25%, more preferably from 10 to 20% of plasticizer added - dibutyl phthalate, diisobutyl phthalate, di(2-ethylhexyl) phthalate, polyalkylbenzene, polyester preferably dibutyl phthalate, diisobutyl phthalate, more preferably diisobutyl phthalate, in form of dispersion containing from 20 to 70% of water, preferably from 40 to 60%, more preferably from 40 to 50%.
c) from 0 to 40 parts by weight, preferably from 5 to 30 parts by weight, more preferably from 5 to 20 parts by weight of diene polymer based on copolymer containing from 30 to 80%, preferably from 40 to 70%, more preferably from 50 to 60% of styrene monomer and from 10 to 60%, preferably from 20 to 50%, and more preferably from 30 to 40% of butadiene monomer and from 0 to 40%, preferably from 5 to 30%, more preferably from 10 to 20% of monomer - acrylic acid and from, 0 to 30%, preferably from 0 to 20%, more preferably from 0 to 10% of monomer acrylonitrile, in the form of emulsion containing from 20 to 80%, preferably from 30 to 60%, more preferably from 40 to 60% of water.
d) from 0 to 20 parts by weight, preferably from 0 to 15 parts by weight, more preferably from 1 to 10 parts by weight of acrylic polymer, e.g. like poly(acrylic acid), poly(methacrylic acid), polyacrylamide, polymethacrylamide, poly(methyl acrylate), poly(butyl acrylate), poly(ethyl acrylate), preferably poly(acrylic acid), poly(methacrylic acid), poly(butyl acrylate), poly(ethyl acrylate), more preferably poly(acrylic acid), poly(methacrylic acid), obtained in course of emulsion polymerization in mineral oil characterized with mean molecular weight close to 20000 or higher.
e) from 0 to 15 parts by weight, preferably from 0 to 10 parts by weight, more preferably from 0 to 8 parts by weight of polysaccharide based on cellulose and starch ethers, e.g. like sodum salt of carboxymethyl cellulose, hydroxyethyl cellulose, hydroxypropylo cellulose, carboxymethyl starch, preferably sodium salt of carboxymethyl cellulose, hydroxyethyl cellulose, carboxymethyl starch, more preferably sodium salt of carboxymethyl cellulose, carboxymethyl starch.
f) from 0 to 30 parts by weight, preferably from 0 to 20 parts by weight, more preferably from 2 to 15 parts by weight of ethylene glycol, diethylene glycol, propylene glycol, dipropylene glycol, preferably ethylene glycol, diethylene glycol, propylene glycol, more preferably diethylene glycol, propylene glycol.

The method of production of adhesive according to presented invention comprises of:
1) introducing 10 parts by weight of water to mixer,
2) switching-on paddle mixer and setting the rotator speed to ca 1000 rpm,
3) using mixer slowly adding 45 parts by weight of polymer poly(vinyl acetate) containing 2% of diisobutylene in the form of dispersion containing 50% of water,
4) mixing of the above said mixture at temperature of 25 °C for 30 minutes,
5) next adding 20 parts by weight of diene polymer containing copolymer of composition 50% styrene, 40% butadiene, 10% acrylic acid in the form of emulsion containing 45% of water,
6) mixing of the above said mixture at temperature of 25 °C for 30 minutes,
7) next adding 10 parts by weight of acrylate polymer based on poly(acrylic acid) obtained by emulsion polymerization in mineral oil characterized with mean molecular weight close to 20000,
8) mixing of the above said mixture at temperature of 25 °C for 60 minutes,
9) next adding 15 parts by weight of diethylene glycol,
10) mixing of the above said mixture at temperature of 25 °C for 120 minutes,
11) next the mixture is poured into packaging containers.

The following examples present adhesive obtained according to the above described procedure, containing poly(vinyl acetate) with addition of plasticizer. This glue offers excellent adhesion properties in both porous and non-porous materials (substrates). The process of aging of this adhesive is slow, the obtained layer it is colorless and elastic.

The elasticity of adhesive layer is increased by adding of dien polymer of butadiene. The application of acrylic acid increases resistance of adhesive layer to compression at different temperatures. The addition of styrene increases thermal resistance. The addition of butadiene results in increased resistance to effects of atmospheric conditions. The addition of styrene results also in good mechanical properties of the adhesive layer at low temperatures.

Acrylate polymer included in the composition of the adhesive results in increased specific adhesion parameters, increasing adherence of the glue to metal sufraces. The addition of polysaccharide to the composition results in increased thickness. The addition of glycol increases elasticity of the adhesive layer and lengthens the drying time of the adhesive layer at the high temperature as well as it decreases the glue freezing temperature.

The obtained adhesive is in the form of emulsion with consistency of a "thick cream". The density parameters can be adjusted by diluting adhesive with water.

After drying, the adhesive forms an elastic, insoluble-in-water layer of adherence and joining properties allowing subsequent applications of a few new layers of the adhesive and posters without the necessity of removing of previously applied layers.

The adhesive can be stored at the temperature from 5 to 20°C. The shelf life of this adhesive is 12 months, during this time no changes such as ageing or play separation were observed all properties of adhesive were retained.
The detail modifications of the adhesive for gluing posters to metal posting boards are presented in following examples.

### Example I

Adhesive for gluing posters to metal posting boards 10 parts by weight of water are introduced to the mixer, the paddle mixer is switched-on and the rotator is set for speed to ca 1000 rpm, next 45 parts by weight of polymer poly(vinyl acetate) containing 2% of diisobutylene in the form of dispersion containing 50% of water are slowly added. The mixture is stirred at the temperature of 25°C for 30 minutes, next 20 parts by weight of diene polymer containing copolymer of composition 50% styrene, 40% butadiene, 10% acrylic acid in the form of emulsion containing 45% of water are added. Thus obtained mixture is stirred at the temperature of 25°C for 30 minutes, next 10 parts by weight of acrylate polymer based on poly(acrylic acid) obtained by emulsion polymerization in mineral oil characterized with mean molecular weight close to 20000 are added. Thus obtained mixture is stirred at the temperature of 25°C for 60 minutes and next 15 parts by weight of diethylene glycol are added. Thus obtained mixture is stirred at the temperature of 25°C for 120 minutes, followed by transfer of mixture into the packaging containers.

### Example II

Winter type adhesive, designed to be used at the temperatures from 0°C to -10 °C.

40 parts by weight of water are introduced to the mixer, the paddle mixer is switched-on and the rotator is set for speed to 500 rpm, the mixture is heated to the temperature of 40°C and next 8 parts by weight of polysaccharide in the form of sodium salt of carboxymethyl cellulose are added; thus obtained mixture is stirred for 120 minutes, then cooled down to the temperature of 25 °C and the stirring rate is increased to 2000 rpm, then 15 parts by weight of polymer poly(vinyl acetate) containing 20% of dibutyl phthalate in the form of dispersion containing 42% of water are added; thus obtained mixture is stirred for 60 minutes at the temperature of 25 °C. Next 15 parts by weight of copolymer 60% styrene, 30% butadiene, 10% acrylic acid in the form of emulsion containing 50% of water and the mixture is stirred for 60 minutes. Next 2 parts by weight of polyacrylic polymer based on poly(methacyrylic acid) characterized with mean molecular weight close to 22 000 are added, and the mixture is stirred at the temperature of 25°C for 60 minutes. Successively 20 parts by weight of propylene glycol are added followed with 120 minutes stirring followed by transfer of mixture into the packaging containers.

### Example III

Summer-type adhesive, designed to be used at the air temperatures higher then 20°C.

43 parts by weight of water are added to the mixer, the paddle mixer is switched-on and the rotator is set for speed to 1500 rpm, the mixture is heated to the temperature of 25°C, next 30 parts by weight of polymer poly(vinyl acetate) containing 11% of diisobutyl phthalate in the form of dispersion containing 45% of water are added. The mixture is stirred at the temperature of 25°C for 30 minutes, next 10 parts by weight of polymer containing copolymer of composition 55% styrene, 35% butadiene, 10% acrylic acid in the form of emulsion containing 50% of water are added. Thus obtained mixture is stirred for 30 minutes at the temperature of 25°C, next 2 parts by weight of acrylate polymer based on poly(acrylic acid) characterized with mean molecular weight close to 20000 are added. Thus obtained mixture is stirred for 60 minutes, next 15 parts by weight of diethylene glycol are added. Thus obtained mixture is stirred for 60 minutes at the temperature of 15°C, followed by transfer of mixture into the packaging containers.

### Example IV

Spring and autumn-type adhesive, designed to be used at the ambient temperatures higher than 25°C

45 parts by weight of water are introduced to the mixer, the paddle mixer is switched-on and the rotator is set for speed to 2000 rpm, the mixture is heated to the temperature of 25°C, next 40 parts by weight of polymer poly(vinyl acetate) containing 11% of diisobutyl phthalate in the form of dispersion containing 45% of water are added. The mixture is stirred for 30 minutes, next 5 parts by weight of polymer containing copolymer of composition 55% styrene, 35% butadiene, 10% acrylic acid in the form of emulsion containing 50% of water are added. Thus obtained mixture is stirred for 30 minutes, next 5 parts by weight of acrylate polymer based on poly(acrylic acid) characterized with mean molecular weight close to 20000 are added. Thus obtained mixture is stirred for 60 minutes, next 5 parts by weight of diethylene glycol are added. Thus obtained mixture is stirred at the temperature of 25°C for 60 minutes, followed by transfer of mixture into the packaging containers.

### Example V

Summer-type adhesive, designed to be used at the ambient temperatures from 5°C to 20°C.

65 parts by weight of water are introduced to the mixer, the paddle mixer is switched-on and the rotator is set for speed to 1500 rpm, the mixture is heated to the temperature of 25°C and next 1 part by weight polysaccharide in the form of sodium salt of carboxymethyl cellulose is added, next the mixture is stirred for 180 minutes, next 15 parts by weight of polymer poly(vinyl acetate) containing 20% of diisobutylene in the form of dispersion containing 50% of water are added. The mixture is stirred for 60 minutes, next 15 parts by weight of polymer poly(vinyl acetate) containing 2% of diisobutyl phthalate in the form of dispersion containing 50% of water are added. The mixture is stirred for 60 minutes, next 4 parts by weight of diethylene glycol are added. Thus obtained mixture is stirred for 60 minutes at the temperature of 25°C, followed by transfer of mixture into the packaging containers.

### Example VI

Spring and autumn-type adhesive, designed to be used at the ambient temperatures from 5 to 15°C.

66 parts by weight of water are introduced to the mixer, the paddle mixer is switched-on and the rotator is set for speed to 1000 rpm, at the temperature of 25°C and 2 parts by weight of polysaccharide in the form of sodium salt of carboxymethyl cellulose are added, next 30 parts by weight of polymer poly(vinyl acetate) containing 11% of diisobutylene in the form of dispersion containing 45% of water are added, next the mixture is stirred for 120 minutes and 2 parts by weight of diethylene glycol are added. Thus obtained mixture is stirred for 60 minutes at the temperature of 25°C, followed by transfer of mixture into the packaging containers.

### Example VII

Spring and autumn type-adhesive, designed to be used in rainy (wet) conditions.

40 parts by weight of water is introduced to the mixer, the paddle mixer is switched-on and the rotator is set for speed to 800 rpm, water is heated up to the temperature of 80°C and 10 parts by weight of polysaccharide in the form of carboxymethyl starch are added, next the mixture is stirred for 120 minutes, next the mixture is cooled down to the temperature of 25°C and 10 parts by weight of polymer poly(vinyl acetate) in the form of dispersion containing 50% of water are added, next the mixture is stirred for 60 minutes. Next 40 parts by weight of copolymer of composition 60%, styrene, 20% butadiene, 20% acrylonitryle in the form of emulsion containing 40% of water are added. Thus obtained mixture is stirred at the temperature of 25°C for 60 minutes, followed by transfer of mixture into the packaging containers.

Adhesives prepared according to the herein described method characterize themselves in all of the above described chemical variations with high stability of the adhesive layer, elasticity and applicability with various types of poster with posting surface materials, such as metal or other materials like glass, modeling paste, ceramics, plaster and other.

## Claims

1. An adhesive for gluing posters to billboards **characterized in that** is comprising a mixture of polymers and/or polysaccharide **characterized in that** is comprising mixture of
a) from 10 to 80 parts by weight of water, preferably from 40 to 50 parts by weight of water,
b) from 5 to 60 parts by weight of polymer - poly(vinyl acetate), preferably from 30 to 40 parts by weight of this polymer, obtained in course of emulsion polymerization of vinyl acetate employing polyvinyl alcohol as protective colloid and containing from 0 to 30% with respect to the total polymer mass, preferably from 10 to 20% of plasticizer added - dibutyl phthalate, diisobutyl phthalate, di(2ethoxyhexyl) phthalate, poly(alkylbenzene), polyester preferably dibutyl phthalate, diisobutyl phthalate, more preferably diisobutyl phthalate, in form of dispersion containing from 20 to 70% of water, preferably from 40 to 60%, more preferably from 40 to 50%,
c) from 0 to 40 parts by weight, preferably from 5 to 30 parts by weight, more preferably from 5 to 20 parts by weight of diene polymer based on copolymer containing from 30 to 80%, preferably from 50 to 60% of styrene monomer and from 10 to 60%, preferably from 30 to 40% of butadiene monomer and from 0 to 40%, preferably from 10 to 20% of monomer - acrylic acid, from 0 to 30%, preferably from 0 to 10% of monomer acrylonitrile, in the form of emulsion containing from 20 to 80%, preferably from 30 to 60%, more preferably from 40 to 60% of water,
d) from 0 to 20 parts by weight, preferably from 0 to 10 parts by weight of acrylic polymer, e.g. like poly(acrylic acid), poly(methacrylic acid), polyacrylamide, polymethacrylamide, poly(methyl acrylate), poly(butyl acrylate), poly(ethyl acrylate), preferably poly(acrylic acid), poly(methacrylic acid), obtained in course of emulsion polymerization in mineral oil **characterized** with mean molecular weight close to 20000 or higher.
e) from 0 to 15 parts by weight, preferably from 0 to 8 parts by weight of polysaccharide based on cellulose and starch ethers, e.g. sodium salt of carboxymethyl cellulose, hydroxyethyl cellulose, carboxymethyl starch,
f) from 0 to 30 parts by weight, preferably from 2 to 15 parts by weight of ethylene glycol, diethylene glycol, propylene glycol, dipropylene glycol, preferably diethylene glycol, propylene glycol.

2. The production method of the adhesive for gluing posters to metal billboards **characterized in that** involves the following steps:
10 parts by weight of water are introduced to the mixer and the paddle mixer is switched-on with rotator speed set to 1000 rpm, 45 parts by weight of polymer poly(vinyl acetate) containing 2% of diisobutylene in the form of dispersion containing 50% of water are slowly added, next the mixture is stirred at the temperature of 25°C for 30 minutes, next 20 parts by weight of diene polymer containing copolymer of composition 50% styrene, 40% butadiene, 10% acrylic acid in the form of emulsion containing 45% of water are added, next the mixture is mixed at the temperature of 25°C for 30 minutes, next 10 parts by weight of acrylate polymer based on poly(acrylic acid) obtained by emulsion polymerization in mineral oil with mean molecular weight close to 20000 are added, next the mixture is mixed at the temperature of 25°C for about 60 minutes, next 15 parts by weight of diethylene glycol are added, next the mixture is mixed at the temperature of 25°C for about 120 minutes, followed by pouring into the packaging containers.

3. The method according to the claim 2 for production of adhesive design is to be used at the temperatures of 0°C to -10°C, wherein 40 parts by weight of water are introduced to the mixer, the paddle mixer is switched-on and the rotator is set for speed to 500 rpm, the mixture is heated to the temperature of 40°C and next 8 parts by weight of polysaccharide in the form of sodium salt of carboxymethyl cellulose are added and thus obtained mixture is stirred for 120 minutes, then it is cooled down to the temperature of 25°C and the stirring rate is increased to 2000 rpm, then 15 parts by weight of polymer poly(vinyl acetate) containing 20% of dibutyl phthalate in the form of dispersion containing 42% of water are added and thus obtained mixture is stirred for 60 minutes at the temperature of 25°C, next 15 parts by weight of copolymer 60% styrene, 30% butadiene, 10% acrylic acid in the form of emulsion containing 50% of water are added and the mixture is stirred for 60 minutes. Next, 2 parts by weight of polyacrylic polymer based on polymethacyrylic acid **characterized** with mean molecular weight close to 22000 are added, and the mixture is stirred at the temperature of 25°C for 60 minutes. Next, 20 parts by weight of propylene glycol are added followed with 120 minutes stirring followed by transfer of mixture into the packaging containers.

4. Method according to the claim 2 for production of adhesive design is to be used at the temperatures higher than 20°C, wherein 43 parts by weight of water are added to the mixer, the paddle mixer is switched-on and the rotator is set for speed to 1500 rpm, the mixture is heated to the temperature of 25°C and next 30 parts by weight of polymer poly(vinyl acetate) containing 11% of diisobutyl phthalate in the form of dispersion containing 45% of water are added, the mixture is stirred at the temperature of 25°C for 30 minutes, next 10 parts by weight of polymer containing copolymer of composition 55% styrene, 35% butadiene, 10% acrylic acid in the form of emulsion containing 50% of water are added, thus obtained mixture is stirred for 30 minutes at the temperature of 25°C, next 2 parts by weight of acrylate polymer based on poly(acrylic acid) **characterized** with mean molecular weight close to 20000 are added. Thus obtained mixture is stirred for 60 minutes and next 15 parts by weight of diethylene glycol are added. Thus obtained mixture is stirred for 60 minutes at the temperature of 15°C, followed by transfer of mixture into the packaging containers.

5. Method according to the claim 2 for production of adhesive design is to be used at the temperatures higher than 15°C, wherein 45 parts by weight of water are added to the mixer, the paddle mixer is switched-on and the rotator is set for speed to 2000 rpm, the mixture is heated to the temperature of 25°C and next 40 parts by weight of polymer poly(vinyl acetate) containing 11% of diisobutyl phthalate in the form of dispersion containing 45% of water are added, the mixture is stirred for 30 minutes, next 5 parts by weight of polymer containing copolymer of composition 55% styrene, 35% butadiene, 10% acrylic acid in the form of emulsion containing 50% of water are added, thus obtained mixture is stirred for 30 minutes, next 5 parts by weight of acrylate polymer based on poly(acrylic acid) **characterized** with mean molecular weight close to 20000 are added, thus obtained mixture is stirred for 60 minutes and next the 5 parts by weight of diethylene glycol are added, thus obtained mixture is stirred at the temperature of 25°C for 60 minutes, followed by transfer of mixture into the packaging containers.

6. Method according to the claim 2 for production of adhesive design is to be used at the temperatures from 5° to 20°C, wherein 65 parts by weight of water are added to the mixer, the paddle mixer is switched-on and the rotator is set for speed to 1500 rpm, the mixture is heated to the temperature of 25°C and next 1 part by weight polysaccharide in the form of sodium salt of carboxymethyl cellulose is added, next the mixture is stirred for 180 minutes and next 15 parts by weight of polymer poly(vinyl acetate) containing 20% of diisobutylene in the form of dispersion containing 50 % of water are added, the mixture is stirred for 60 minutes, next 15 parts by weight of polymer poly(vinyl acetate) containing 2% of diisobutyl phthalate in the form of dispersion containing 50% of water are added, the mixture is stirred for 60 and next 4 parts by weight of diethylene glycol are added, thus obtained mixture is stirred for 60 minutes at the temperature of 25°C, followed by transfer of mixture into the packaging containers.

7. Method according to the claim 2 for production of adhesive design is to be used at the temperatures from 5° to 15°C, wherein 66 parts by weight of water are added to the mixer, the paddle mixer is switched-on and the rotator is set for speed to 1000 rpm, at the temperature of 25°C and 2 parts by weight of polysaccharide in the form of sodium salt of carboxymethyl cellulose are added, next the mixture is stirred for 180 minutes, next 30 parts by weight of polymer poly(vinyl acetate) containing 11% of diisobutylene in the form of dispersion containing 45% of water are added, next the mixture is stirred for 120 minutes and 2 parts by weight of diethylene glycol are added, thus obtained mixture is stirred for 60 minutes at the temperature of 25°C, followed by transfer of mixture into the packaging containers.

8. Method according to the claim 2 for production of adhesive designed is to be used for rainy (wet) weather conditions, wherein parts by weight of water are added to the mixer 40, the to mixer paddle mixer is switched-on and the rotator is set for speed to 800 rpm, water is heated up to the temperature of 80°C and 10 parts by weight of polysaccharide in the form of carboxymethyl starch are added, next the mixture is stirred for 120 minutes and next the mixture is cooled down to the temperature of 25°C and 10 parts by weight of polymer poly(vinyl acetate) in the form of dispersion containing 50% of water are added, next the mixture is stirred for 60 minutes, next 40 parts by weight of copolymer of composition 60% styrene, 20% butadiene, 20% acrylonitryle in the form of emulsion containing 40% of water are added, thus obtained mixture is stirred at the temperature of 25°C for 60 minutes, followed by transfer of mixture into the packaging containers.

## Amended claims

### Amended claims in accordance with Rule 86(2) EPC.

**1.** An adhesive for gluing posters to billboards **characterized in that** is comprising from 5 to 60 parts per weight of polymer poly(vinyl acetate), from 1 to 40 parts per weight of diene polymer, from 1 to 20 parts per weight of acrylic polymer, from 1 to 15 parts per weight of polysaccharide, from 1 to 30 parts per weight of glycol and from 10 to 80 parts per weight of water.

**2.** Glue according to the claim 1, in which the glue contains from 5 to 60 parts per weigh of polymer poly(vinyl acetate) obtained in course of emulsion polymerization of vinyl acetate employing poly(vinyl alcohol).

**3.** Glue according to the claim 2, in which the glue contains from 5 to 60 parts per weigh of polymer poly(vinyl acetate) obtained using protective colloid and containing from 1 to 30% with respect to the total polymer mass, of plasticizer added, preferably diisobutyl phthalate in the form of dispersion containing from 20 to 70% of water.

**4.** Glue according to the claim 1, in which the glue contains from 1 to 40 parts by weight of diene polymer based on copolymer containing from 50 to 60% of styrene monomer, from 30 to 40% of butadiene monomer, from 10 to 20% of monomer - acrylic acid and from 1 to 10% of monomer acrylonitrile, in the form of emulsion containing from 40 to 60% of water.

**5.** Glue according to the claim 1, in which the glue contains from 1 to 20 parts by weight of acrylic polymer, e.g. like poly(acrylic acid), and/or poly(methacrylic acid), obtained in course of emulsion polymerization in mineral oil **characterized** with mean molecular weight close to 20000 or higher.

**6.** Glue according to the claim 1, in which the glue contains from 1 to 15 parts by weight of polysaccharide based on cellulose and starch ethers, e.g. like sodim salt of carboxymethyl cellulose and/or carboxymethyl starch.

**7.** Glue according to the claim 1, in which the glue contains from 1 to 30 parts by weight of glycol: diethylene glycol and/or propylene glycol.

**8.** An adhesive for gluing posters to billboards, in which glue is a mixture containing from 5 to 60 parts per weight of polymer poly(vinyl acetate), from 1 to 40 parts per weight of diene polymer, from 1 to 20 parts per weight of acrylic polymer, from 1 to 15 parts per weight of polysaccharide and from 10 to 80 parts per weight of water, mixture based on copolymer containing from 50 to 60% of styrene monomer, from 30 to 40% of butadiene monomer, from 10 to 20% of monomer - acrylic acid and from 1 to 10% of monomer acrylonitrile, in the form of emulsion containing from 40 to 60% of water.

**9.** Glue according to the claim 8, in which the glue contains from 1 to 20 parts by weight of acrylic polymer, e.g. like poly(acrylic acid), and/or poly(methacrylic acid), obtained in course of emulsion polymerization in mineral oil **characterized** with mean molecular weight close to 20000 or higher.

**10.** Glue according to the claim 8, in which the glue contains from 1 to 15 parts by weight of polysaccharide based on cellulose and starch ethers, e.g. like sodum salt of carboxymethyl cellulose and/or carboxymethyl starch
